# EUROPEAN PATENT SPECIFICATION

(11) **EP 3 012 484 B1**
(45) Date of publication and mention of the grant of the patent: **01.08.2018**
(21) Application number: 14813463.8
(22) Date of filing: 18.06.2014
(51) Int. Cl.: F16G 3/08

(54) **CONNECTOR FOR MECHANICALLY LINKING CONVEYOR BELTS**
VERBINDER ZUR MECHANISCHEN VERKNÜPFUNG VON FÖRDERBÄNDERN
CONNECTEUR POUR L'ASSEMBLAGE MÉCANIQUE DE BANDES DE CONVOYEURS

(30) Priority: 19.06.2013 UA 2013007787
(43) Date of publication of application: 27.04.2016
(73) Proprietor: Kovalchuk, Volodymyr, Odesa 65121 (UA)
(72) Inventor: BEREZHYNSKYI, Volodymyr, Donetsk 83015 (UA); HANZIUK, Volodymyr, Kyiv 03164 (UA)
(74) Representative: Kastel, Stefan
(86) International application number: PCT/UA2014/000065
(87) International publication number: WO 2014/204424

(56) References cited:
- WO-A1-2015/076774
- RO-B1- 103 617
- RU-U1- 115 029
- UA-U- 24 760
- UA-U- 24 760
- UA-U- 73 675

## Description

The invention relates to conveyor technology, and specifically to belt conveyors, and can be used in underground mining operations, including in coal mines.

Well known is a mechanical connecting device for fabric-ply belts "Vulcan", comprising two through-holed clamping plates and a connecting bolt, at that both clamping plates have a common central through hole and the through hole of one clamping plate contains a rigidly fixed tapered sleeve whose internal thread corresponds to the external thread of the bolt and the height is below the thickness of the fastened conveyor belt ends (refer to the Patent RU Nº 54629, IPC [International Patent Classification] E 21F 13/08, published on 10.07.2006).

The known rubberized conveyor belts connector "Vulcan" weaknesses include the following:
- when mounted on the conveyor belt surface, that connector parts, namely the clamping plates' corners and edges (the plates being shaped as round-cornered squares), are protruding above the surface plane thus increasing the risk of connector detachment from the travelling path when they do enter into contact with the other conveyor components;
- insufficient rigidity of the sleeve's attachment to the clamping plate, manifested in some cases at bolt tightening as the sleeve's over-twist against the clamped plate that forbids to apply the force required to tighten the connector's bolt;
- while tightening, the clamping plate's sleeve due to its square-cornered shape, disturbs the conveyor belt, that results in the compressive force's non-uniform transmission to the connected belt ends' frame, hence in the reduced strength of the conveyor belt' mechanical linking as a whole.

Known is a rubber-fabric conveyor belts connector comprising two centrally through-holed clamping plates, a sleeve, rigidly fixed in a through hole of one of those clamping plates, and a connecting bolt. The clamping plates' edges are curvilinear-shaped and have protruding teeth; the clamping plates properly are equipped with additional ribs and the sleeve's shape is hexagonal (refer to Patent UA Nº 73675, IPC [International Patent Classification] E 21F 13/08, published on 10.10.2012, Bulletin Nº19).

Such rubber conveyor belts connector structure has such weaknesses as the linkage's insufficient strength and durability due to the damage of conveyor belt ends' working and running covers, connected with the clamping plates' bent ends to the teeth.

Another known belts connector "Styk" includes a sets of two profiled plates with a connecting element, those profiled plates have centrally arranged through-holes placing the connecting element; wherein the profiled plates' inner surface is provided with at least three profiled protrusions, and the connecting member represents a bolt which head fits the upper profiled plate' seat bore.

In one embodiment, the profiled plates' inner surface is provided with four symmetrically positioned profiled projections and the profiled protrusions properly in cross-section have a «U»-type approximated shape; the bolt's tip end is conical, the lower profiled plate's through hole internal surface is arranged with a thread, either a nut is pressed into the bottom profiled plate opening (refer to the Patent UA Nº 24760, IPC [International Patent Classification] B 65G 15/30, published on 10.07.2007, Bulletin No 10). That known belts connector "Styk" is used for joining conveyor belts when bulk materials transport at very high loads, the conveyor length being 500-4000 m.

The known belts connector has been selected as a closest analogue (prototype).

The closest analogue and the claimed invention have the following common features:
- The structure includes two profiled plates and the connecting member;
- Both profiled plates have a centrally located through hole, the inner surface of every plate locating symmetrically profiled protrusions;
- The connecting element is represented with a bolt head which corresponds to the upper profiled plate's bore;
- The lower profiled plate has a center-positioned through hole locating a pressed nut.

Such design weaknesses:
- To ensure the edge joint's required breaking strength used is a large number of connectors, therefore when randomly oriented plates tightened, around them on the carrying-side covers' surface there occur some projections and depressions, that makes uneven the conveyor belt surface;
- The visual similarity between upper and lower profiled plates increases their installation time.

The basic concept of this invention is to create a strong, reliable, simple and inexpensive construction of a durable high-quality fastener "PWC" for mechanical linking of conveyor belts, allowing the installation time to be reduced, while maintaining reliable strength in the joints with the conveyor belt flat level maintained in the edges joint area.

The claimed device is aimed at improving the design of connector "PWC" for conveyor belts mechanical linking, thus allowing its use in large area joints, therefore high reliability being ensured through the use of structurally simple mutually independent connectors.

The set task of the conveyor belts connector "PWC", comprising a set of two profiled plates and the connecting element, when each profiled plate have a centrally located through hole, placing a connecting member shaped as a bolt head that corresponds to the upper profiled plate's bore, the inner surface of every plate locating symmetrically the profiled protrusions and the lower profiled plate's central through hole bears a pressed-in nut, is solved by arranging at the upper profiled plate has additional tapered holes (recessions), symmetrically positioned between its profiled projections at the inner surface of the profiled plate.

The claimed invention novelty is that the upper profiled plate is provided with additional cone-shaped holes (recessions), symmetrically positioned between the profiled protrusions, at that the holes (recessions) being located at the inner surface of the profiled plate.

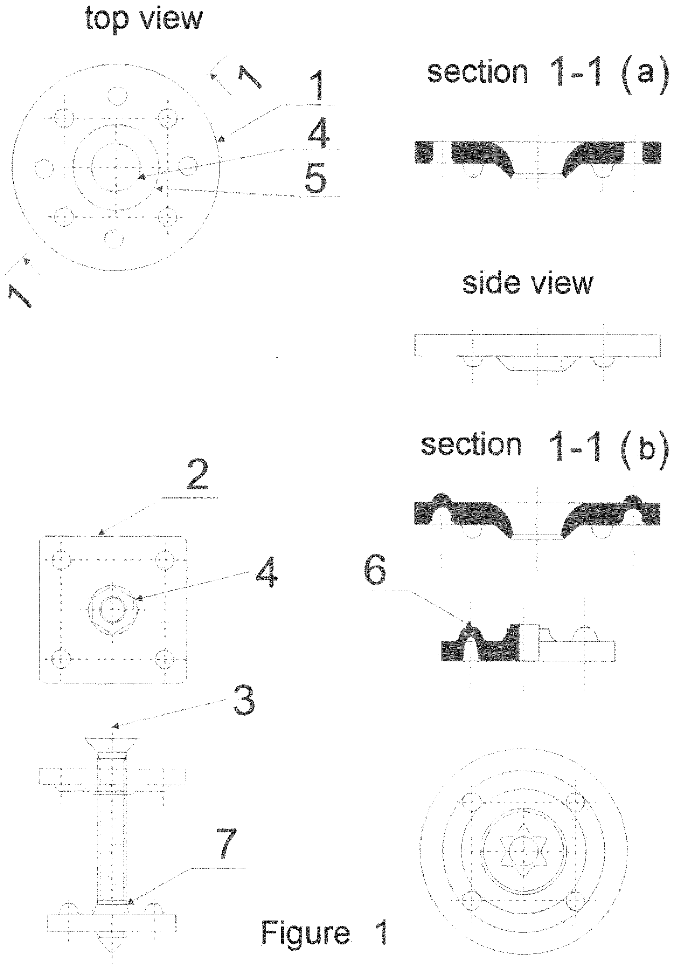

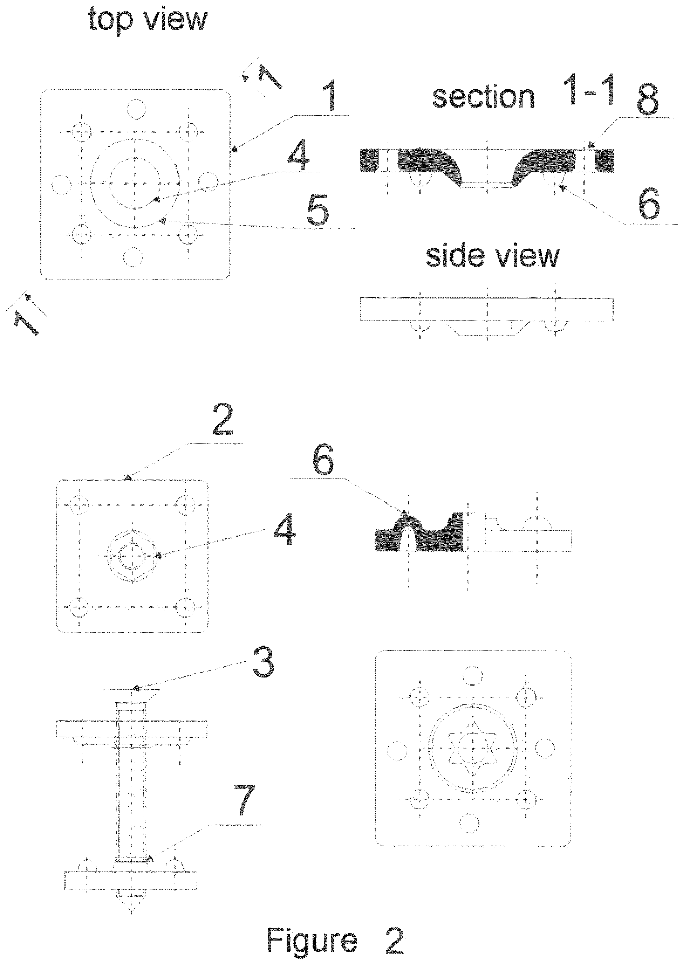

The claimed conveyor belts connector "PWC" (see fig. 1) includes two profiled plates: the upper 1 and the lower 2, and the connecting element 3 formed as a bolt. Each of the profiled plates 1 and 2 has a centrally positioned through hole 4 arranged to meet the bolt-shaped connecting member 3, which head corresponds to the receiving bore 5 at the upper profiled plate 1. The conveyor belt facing surface of the upper and the lower profiled plates 1, 2 bears the profiled projections 6, intended for the profiled plates' linking to the conveyor belt. The connecting bolt's 3 head end has a hexagon socket meeting the stillson wrench. The bolt rod bears threads for screwing into the nut 7, rigidly pressed into the hole of the bottom profiled plate 2.

The upper profiled plate 1 also bears additional conical holes or recessions 8 arranged symmetrically between its shaped protrusions 6.

The lower profiled plate 2 has a centrally-positioned through hole 4, with a pressed-in nut 7 and profiled protrusions.

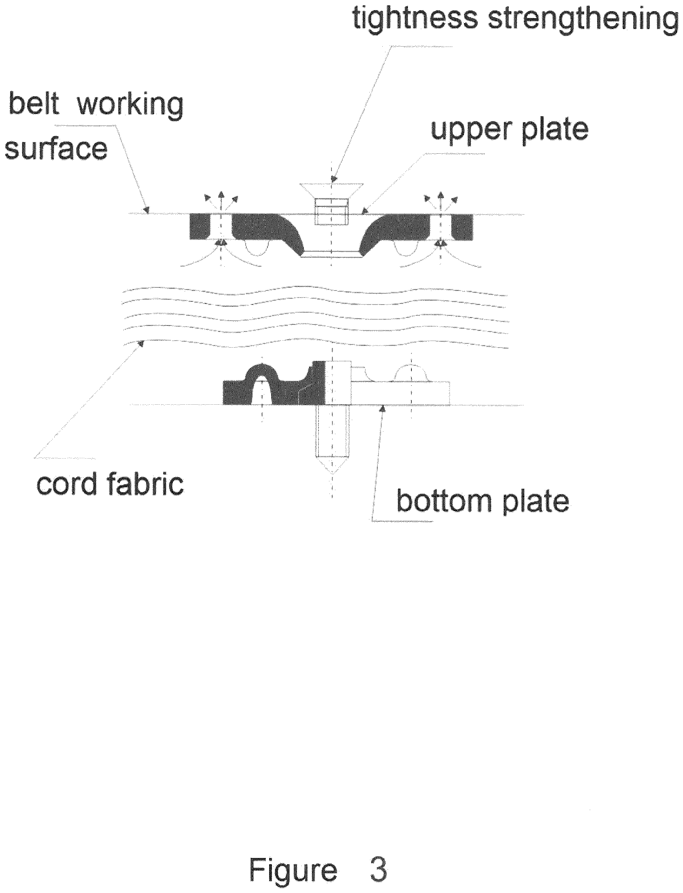

The linkage joint is assembled as follows:
The coupled conveyor belts' ends (refer to Fig. 3), are cut at an angle of 90° with further stepwise processing, degreasing and they are prepared for joining. After drying, the conveyor belts ends are superimposed, rolled-on and hammer-rapped from the middle part to the edges. Then in the conveyor belt joint area drilled are the holes. Next, the profiled plate 1 with its embedded bolt 3, is superposed onto the belt, with further bolt insertion into the conveyor belt opening. On the conveyor belt lower side, the profiled bottom plate 2 is screwed onto the bolt 3. The bolt 3 is screwed into the nut 7 disposed on the lower profiled plate 2. Further the profiled plates 1 and 2 are tightened together using the bolt 3. Thus, all the connecting elements are installed. The bolted joint assemblage is finalized with breaking off the bolted joint's speakers protruding above the conveyor belt.

The claimed technical result consists in the following: the proposed construction of conveyor belts connector "PWC" provides a safe operation of the conveyor at the belt gasket strength reaching 1600-2000 N/mm. The tapered through holes or recessions 8 in the upper profiled plate 1 allow the conveyor belt facing surface to be pressed through these holes (recessions) when the connector "PWC" is pressed against the conveyor belt.

These substantial differences allow achieving the following technical result:
- To increase the rubber conveyor belts end joint's breaching strength;
- To reduce the belt flatness discrepancies in the area of the belt ends linkage;
- To accelerate the connector "PWC" installation considering that the lower and upper profiled plates are visually and tactually easily distinguishable due to their different constructional features.

## Claims

1. Connector for mechanically linking conveyor belts, comprising
a set of two profiled plates (1, 2) and a connecting element (3), wherein each profiled plate (1, 2) has a centrally-positioned through hole (4) locating said connecting member (3) having a bolt-shape, the head of said connecting member (3) corresponding to a bore (5) provided in the upper profiled plate (1) and the inner surfaces of the profiled plates (1, 2) bear shaped protrusions (6) being symmetrically placed;
and a nut (7) pressed into the lower profiled plate (2) central through hole (4),
**characterized in that** additional tapered holes (8) are symmetrically arranged between the upper profiled plate (1) shaped protrusions (6) at the inner surface of the profiled plate (1).

## Patentansprüche

1. Verbinder zur mechanischen Verknüpfung von Förderbändern, umfassend einen Satz von zwei Profilplatten (1, 2) und ein Verbindungselement (3), wobei jede Profilplatte (1, 2) eine zentral positionierte Durchgangsöffnung (4) aufweist, die das Verbindungselement (3) positioniert, das eine Bolzenform hat, wobei der Kopf des Verbindungselements (3) einer Bohrung (5) entspricht, die in der oberen Profilplatte (1) vorgesehen ist, und wobei die Innenflächen der Profilplatten (1, 2) geformte Vorsprünge (6) tragen, die symmetrisch angeordnet sind;
und eine Mutter (7), die in die zentrale Durchgangsöffnung (4) der unteren Profilplatte (2) eingepresst ist,
**dadurch gekennzeichnet, dass** zusätzliche konische Löcher (8) symmetrisch zwischen den geformten Vorsprüngen (6) der oberen Profilplatte (1) an der Innenfläche der Profilplatte (1) angeordnet sind.

## Revendications

1. Connecteur pour l'assemblage mécanique de bandes de convoyeurs, comprenant un ensemble de deux plaques profilées (1, 2) et un élément de liaison (3), dans lequel chaque plaque profilée (1, 2) présente un trou traversant (4) positionné centralement positionnant ledit élément de liaison (3) présentant une forme de boulon, la tête de l'élément de liaison (3) correspondant à un alésage (5) prévu dans la plaque profilée supérieure (1) et les surfaces des plaques profilées (1, 2) portent des saillies façonnées (6) placées symétriquement; et un écrou (7) enfoncé dans le trou traversant central (4) de la plaque profilée inférieure (2),
**caractérisé en ce que** des trous coniques supplémentaires (8) sont disposés symétriquement entre les saillies façonnées (6) de la plaque profilée supérieure (1) sur la surface intérieure de la plaque profilée (1).
